# EUROPÄISCHE PATENTANMELDUNG

(11) **EP 3 441 945 A1**
(43) Veröffentlichungstag der Anmeldung: **13.02.2019**
(21) Anmeldenummer: 17185104.1
(22) Anmeldetag: 07.08.2017
(51) Int. Cl.: G07B 15/00, G07C 9/00, G07F 7/00, G06Q 20/04, G06Q 20/12, G06Q 20/18

(54) **VERFAHREN ZUM BETREIBEN EINES ZUGANGSKONTROLLSYSTEMS UMFASSEND EINEN SERVER, ZUMINDEST EINE ZUGANGSKONTROLLVORRICHTUNG UND ZUMINDEST EIN VERKAUFSSTELLENGERÄT FÜR ZUGANGSBERECHTIGUNGEN FÜR DAS VOM ZUGANGSKONTROLLSYSTEM ABGEDECKTE GEBIET**

(71) Anmelder: SKIDATA AG, 5083 Grödig/Salzburg (AT)
(72) Erfinder: Harasek, Alois, A-5201 Seekirchen (AT); Malmborg, Anders, A-5020 Salzburg (AT); Dachs, Georg, A-5101 Bergheim (AT); Fürhapter, Peter, A-5023 Salzburg (AT)
(74) Vertreter: Karakatsanis, Georgios

(57) **Zusammenfassung**

Im Rahmen des Verfahrens zum Betreiben eines Zugangskontrollsystems umfassend einen Server (3), zumindest eine Zugangskontrollvorrichtung (4) und zumindest ein Verkaufsstellengerät (1) für Zugangsberechtigungen für das vom Zugangskontrollsystem abgedeckte Gebiet, wird ein Algorithmus zur Generierung und Verschlüsselung der Zugangsberechtigungen auf dem zumindest einen Verkaufsstellengerät (1) installiert, wobei dieser Algorithmus lokal nur dann ausgeführt werden kann, wenn er mittels eines Schlüssels entsperrt wird, wobei beim Hochfahren oder Einschalten eines Verkaufsstellengerätes (1) der Schlüssel vom Server (3) an das Verkaufsstellengerät (1) übermittelt wird, wobei wenn ein Verkaufsstellengerät (1) nicht mit dem Server (3) verbunden ist, über den Schlüssel der auf dem Verkaufsstellengerät (1) installierte Algorithmus ausgeführt wird, wobei mittels des Algorithmus eine Zugangsberechtigung generiert, verschlüsselt und als Offline-generierte Zugangsberechtigung gekennzeichnet wird, welche über eine Codiervorrichtung (2) des Verkaufsstellengerätes (1) auf ein Kundenmedium codiert wird, wobei wenn während das Verkaufsstellengerät (1) nicht mit dem Server (3) verbunden ist eine Zugangskontrolle durchgeführt wird, die Offline-generierte Zugangsberechtigung von einer Zugangskontrollvorrichtung (4) ausgelesen wird, wobei sie anhand der Kennzeichnung als Offline-generierte Zugangsberechtigung als solche erkannt wird und die Gültigkeit der Zugangsberechtigung anhand der von dem Verkaufsstellengerät (1) codierten Daten überprüft wird.

## Beschreibung

Die vorliegende Erfindung bezieht sich auf ein Verfahren zum Betreiben eines Zugangskontrollsystems umfassend einen Server, zumindest eine Zugangskontrollvorrichtung und zumindest ein Verkaufsstellengerät für Zugangsberechtigungen für das vom Zugangskontrollsystem abgedeckte Gebiet gemäß dem Oberbegriff des Patentanspruchs 1.

Aus dem Stand der Technik sind Zugangskontrollsysteme bekannt, welche einen Server sowie zumindest eine mit dem Server zum Zweck der Datenkommunikation verbundene Zugangskontrollvorrichtung aufweisen. Zum Verkauf der Zugangsberechtigungen für das vom Zugangskontrollsystem abgedeckte Gebiet sind Verkaufsstellen (Point of Sales) vorgesehen, wobei beim Erwerb einer Zugangsberechtigung die Zugangsberechtigung mittels eines mit dem Server zum Zweck der Datenkommunikation verbundenen Verkaufsstellengeräts auf ein Kundenmedium über eine Codiervorrichtung mittels eines RFID-Standards, vorzugsweise des ISO 15693 Standards codiert wird. Hierbei wird die Zugangsberechtigung im Server generiert und verschlüsselt.

Nach dem Stand der Technik sind die Algorithmen zur Generierung und Verschlüsselung von Zugangsberechtigungen auf dem Server gespeichert und werden nicht an die mit dem Server zum Zweck der Datenkommunikation verbundene Verkaufsstellengeräte verteilt. Die Zugangsberechtigungen werden im Server generiert und verschlüsselt und über die mit dem Server zum Zweck der Datenkommunikation verbundenen Verkaufsstellengeräte auf die Kundenmedien codiert, wobei nach dem Codieren der Zugangsberechtigungen vom Server Informationen über die Gültigkeit der jeweiligen Zugangsberechtigungen an die Zugangskontrollvorrichtungen übermittelt werden.

Bei einem Netzwerkausfall, d.h. in einem Offline-Modus der Verkaufsstellengeräte, können in nachteiliger Weise keine Zugangsberechtigungen verkauft werden, da nach dem Stand der Technik diese nicht von den Verkaufsstellen generiert und verschlüsselt werden können.

Der vorliegenden Erfindung liegt die Aufgabe zugrunde, ein Verfahren zum Betreiben eines Zugangskontrollsystems umfassend einen Server, zumindest eine Zugangskontrollvorrichtung und zumindest ein Verkaufsstellengerät für Zugangsberechtigungen für das vom Zugangskontrollsystem abgedeckte Gebiet anzugeben, durch dessen Durchführung für den Fall, dass sich ein Verkaufsstellengerät eines Zugangskontrollsystems in einem Offline-Modus befindet, der Betrieb des Zugangskontrollsystems und insbesondere der Verkauf von Zugangsberechtigungen aufrechterhalten bleibt.

Diese Aufgabe wird durch die Merkmale des Patentanspruchs gelöst. Eine vorteilhafte Weiterbildung ist Gegenstand des Unteranspruchs.

Demnach wird ein Verfahren zum Betreiben eines Zugangskontrollsystems umfassend einen Server, zumindest eine Zugangskontrollvorrichtung und zumindest ein Verkaufsstellengerät für Zugangsberechtigungen für das vom Zugangskontrollsystem abgedeckte Gebiet vorgeschlagen, im Rahmen dessen der Algorithmus zur Generierung und Verschlüsselung der Zugangsberechtigungen auf dem zumindest einen Verkaufsstellengerät installiert ist, wobei der Algorithmus lokal, d.h. in dem zumindest einen Verkaufsstellengerät nur dann ausgeführt werden kann, wenn er mittels eines Schlüssels entsperrt wird.

Gemäß der Erfindung wird beim Hochfahren eines Verkaufsstellengerätes der Schlüssel zum Entsperren des im Verkaufsstellengerät installierten Algorithmus zur Generierung und Verschlüsselung von Zugangsberechtigungen vom Server an das Verkaufsstellengerät übermittelt, wobei im Online-Fall, d.h. wenn das Verkaufsstellengerät mit dem Server verbunden ist, das Verkaufsstellengerät vom Server eine Zugangsberechtigung anfordert, die im Server generiert und verschlüsselt und vom Server an das Verkaufsstellengerät übertragen wird, wobei die Zugangsberechtigung anschließend über eine Codiervorrichtung des Verkaufsstellengerätes auf ein Kundenmedium codiert wird. Anschließend wird die Information über die Gültigkeit der codierten Zugangsberechtigung vom Server an die zumindest eine Zugangskontrollvorrichtung übermittelt, wobei zur Zugangskontrolle von der jeweiligen Zugangskontrollvorrichtung die Zugangsberechtigung ausgelesen wird und anhand der vom Server übermittelten Informationen die Gültigkeit der Zugangsberechtigung überprüft wird.

Im Offline-Fall, d.h. für den Fall, dass ein Verkaufsstellengerät nicht mit dem Server verbunden ist, wird über den Schlüssel zum Entsperren des im Verkaufsstellengerät installierten Algorithmus der auf dem Verkaufsstellengerät installierte Algorithmus ausgeführt, wobei mittels des auf dem Verkaufsstellengerät installierten Algorithmus eine Zugangsberechtigung generiert, verschlüsselt und als Offline-generierte Zugangsberechtigung gekennzeichnet wird, wobei anschließend diese Zugangsberechtigung über die Codiervorrichtung des Verkaufsstellengerätes auf ein Kundenmedium codiert wird.

Wenn während das Verkaufsstellengerät nicht mit dem Server verbunden ist eine Zugangskontrolle durchgeführt wird, wird die Offline-generierte Zugangsberechtigung von einer Zugangskontrollvorrichtung ausgelesen, wobei sie anhand der Kennzeichnung als Offline-generierte Zugangsberechtigung als solche erkannt wird, wobei die Gültigkeit der Zugangsberechtigung anhand der von dem Verkaufsstellengerät codierten Daten überprüft wird.

Wenn sich das Verkaufsstellengerät anschließend in einem Online-Modus befindet, was dem normalen Betriebszustand entspricht, werden vom Verkaufsstellengerät die Informationen über die vom Verkaufsstellengerät im Offline Modus generierten Zugangsberechtigungen an den Server übermittelt, welcher wiederum die Informationen über die Gültigkeit der Zugangsberechtigungen an die zumindest eine Zugangskontrollvorrichtung übermittelt.

Wenn, nachdem das Verkaufsstellengerät in den Online-Modus übergegangen ist, ein Zugangskontrollvorgang mit einer vom Verkaufsstellengerät im Offline Modus generierten Zugangsberechtigung stattfindet, wird von der Zugangskontrollvorrichtung die Offline-generierte Zugangsberechtigung aus dem Kundenmedium ausgelesen, wobei eine Zugangsberechtigung anhand der vom Server übermittelten Informationen auf das Kundenmedium codiert wird und anschließend die Gültigkeit überprüft wird.

Im Rahmen einer Weiterbildung der Erfindung ist vorgesehen, dass wenn während das Verkaufsstellengerät nicht mit dem Server verbunden ist eine Zugangskontrolle durchgeführt wird, von der Zugangskontrollvorrichtung auf das Kundenmedium eine zeitliche Gültigkeitsbeschränkung, nämlich die Information, dass die Zugangsberechtigung nach einer vorgegebenen Zeit ungültig wird, codiert wird, wobei die zeitliche Gültigkeitsbeschränkung entfernt wird, wenn nachdem das Verkaufsstellengerät in den Online-Modus übergegangen ist, ein Zugangskontrollvorgang stattfindet.

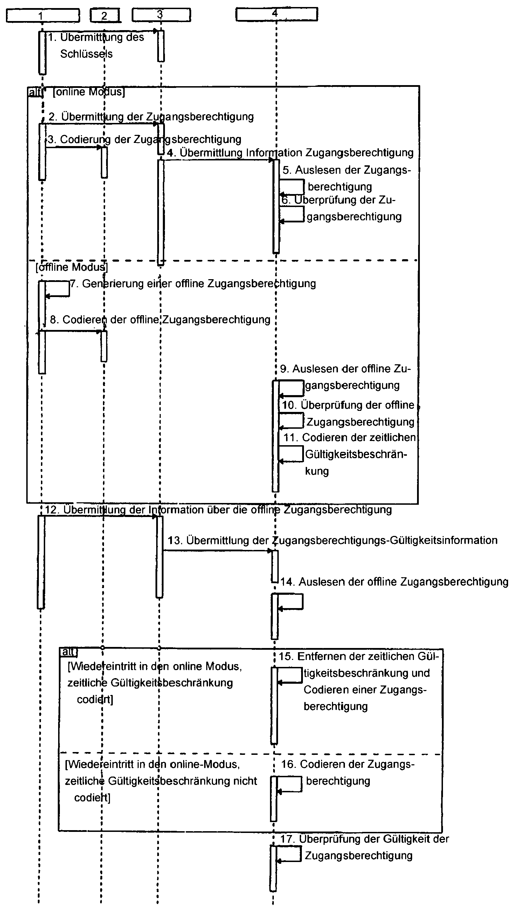

Eine Ausgestaltung der Erfindung wird im Folgenden anhand der beigefügten Figur, welche ein Sequenzdiagramm zur Veranschaulichung der Merkmale des erfindungsgemäßen Verfahrens darstellt, beispielhaft näher erläutert.

Gemäß der Erfindung wird der Algorithmus zur Generierung und Verschlüsselung der Zugangsberechtigungen auf dem zumindest einen Verkaufsstellengerät des Zugangskontrollsystems installiert, wobei der auf dem zumindest einen Verkaufsstellengerät installierte Algorithmus nur dann ausgeführt werden kann, wenn er mittels eines Schlüssels entsperrt wird. Bezugnehmend auf die beigefügte Figur wird beim Hochfahren bzw. Einschalten eines Verkaufsstellengerätes 1 der Schlüssel zum Entsperren des im Verkaufsstellengerät 1 installierten Algorithmus zur Generierung und Verschlüsselung von Zugangsberechtigungen vom Server 3 an das Verkaufsstellengerät 1 übermittelt (Schritt 1).

Wenn sich das Verkaufsstellengerät 1 im Online - Modus befindet, fordert das Verkaufsstellengerät 1 vom Server 3 eine Zugangsberechtigung an, die im Server 3 generiert und verschlüsselt und vom Server 3 an das Verkaufsstellengerät übermittelt wird (Schritt 2), wobei die Zugangsberechtigung anschließend mittels einer Codiervorrichtung 2 des Verkaufsstellengerätes 1 auf ein Kundenmedium codiert wird (Schritt 3).

Anschließend wird die Information über die Gültigkeit der codierten Zugangsberechtigung vom Server 3 an die zumindest eine Zugangskontrollvorrichtung 4 des Zugangskontrollsystems übermittelt (Schritt 4), wobei zur Zugangskontrolle von der jeweiligen Zugangskontrollvorrichtung die Zugangsberechtigung vom Kundenmedium ausgelesen wird (Schritt 5) und anhand der vom Server 3 übermittelten Informationen die Gültigkeit der Zugangsberechtigung überprüft wird (Schritt 6).

Wenn sich ein Verkaufsstellengerät 1 in einem Offline-Modus befindet, wird über den Schlüssel zum Entsperren des im Verkaufsstellengerät 1 installierten Algorithmus der auf dem Verkaufsstellengerät 1 installierte Algorithmus ausgeführt, wobei mittels des auf dem Verkaufsstellengerät 1 installierten Algorithmus eine Zugangsberechtigung generiert, verschlüsselt und als Offline-generierte Zugangsberechtigung gekennzeichnet wird (Schritt 7), wobei anschließend diese Zugangsberechtigung die Codiervorrichtung des Verkaufsstellengerätes auf ein Kundenmedium codiert wird (Schritt 8).

Im Falle einer Zugangskontrolle während das Verkaufsstellengerät 1 nicht mit dem Server 3 verbunden ist wird die Offline-generierte Zugangsberechtigung von einer Zugangskontrollvorrichtung ausgelesen (Schritt 9), wobei sie anhand der Kennzeichnung als Offline-generierte Zugangsberechtigung als solche erkannt wird, deren Gültigkeit anhand der von der Codiervorrichtung 2 des Verkaufsstellengerätes 1 codierten Daten überprüft wird (Schritt 10) und auf das Kundenmedium eine zeitliche Gültigkeitsbeschränkung, nämlich die Information codiert wird, dass die Zugangsberechtigung nach einer vorgegebenen Zeit ungültig wird (Schritt 11).

Wenn das Verkaufsstellengerät 1 anschließend in den Online-Modus übergeht, werden vom Verkaufsstellengerät 1 die Informationen über die vom Verkaufsstellengerät 1 im Offline Modus generierten Zugangsberechtigungen an den Server 3 übermittelt (Schritt 12), wobei der Server 3 die Informationen über die Gültigkeit der Zugangsberechtigungen an die zumindest eine Zugangskontrollvorrichtung 4 des Zugangskontrollsystems übermittelt (Schritt 13).

Im Falle einer anschließenden Zugangskontrolle mit einer vom Verkaufsstellengerät 1 im Offline Modus, d.h. ohne eine Verbindung zum Server 3 generierten Zugangsberechtigung wird die Offline-generierte Zugangsberechtigung von einer Zugangskontrollvorrichtung ausgelesen (Schritt 14), wobei wenn eine zeitlich begrenzte Gültigkeit auf dem Kundenmedium codiert war, was bedeutet, dass das Kundenmedium von einer Zugangskontrollvorrichtung 4 während des Offline-Modus des Verkaufsstellengerätes 1 überprüft worden ist, die zeitliche Gültigkeitsbeschränkung entfernt wird und eine Zugangsberechtigung anhand der vom Server 3 übermittelten Informationen auf das Kundenmedium codiert wird (Schritt 15), wobei anschließend die Gültigkeit der Zugangsberechtigung überprüft wird.

Wenn das Kundenmedium während des Offline-Modus des Verkaufsstellengerätes 1 nicht überprüft worden ist, d.h. wenn keine zeitliche Gültigkeitsbeschränkung auf dem Kundenmedium codiert ist, wird eine Zugangsberechtigung anhand der vom Server übermittelten Informationen über die Gültigkeit der Zugangsberechtigung auf das Kundenmedium codiert (Schritt 16), wobei anschließend die Gültigkeit der Zugangsberechtigung überprüft wird.

## Patentansprüche

1. Verfahren zum Betreiben eines Zugangskontrollsystems umfassend einen Server (3), zumindest eine Zugangskontrollvorrichtung (4) und zumindest ein Verkaufsstellengerät (1) für Zugangsberechtigungen für das vom Zugangskontrollsystem abgedeckte Gebiet, **dadurch gekennzeichnet, dass** ein Algorithmus zur Generierung und Verschlüsselung der Zugangsberechtigungen auf dem zumindest einen Verkaufsstellengerät (1) installiert ist, wobei der auf dem zumindest einen Verkaufsstellengerät (1) installierte Algorithmus lokal, d.h. in dem zumindest einen Verkaufsstellengerät (1) nur dann ausgeführt werden kann, wenn er mittels eines Schlüssels entsperrt wird, wobei beim Hochfahren oder Einschalten eines Verkaufsstellengerätes (1) der Schlüssel zum Entsperren des im Verkaufsstellengerät (1) installierten Algorithmus zur Generierung und Verschlüsselung von Zugangsberechtigungen vom Server (3) an das Verkaufsstellengerät (1) übermittelt wird, wobei wenn ein Verkaufsstellengerät (1) mit dem Server (3) verbunden ist, das Verkaufsstellengerät (1) vom Server (3) eine Zugangsberechtigung anfordert, die im Server (3) generiert und verschlüsselt und vom Server (3) an das Verkaufsstellengerät (1) übertragen wird, wobei die Zugangsberechtigung anschließend über eine Codiervorrichtung (2) des Verkaufsstellengerätes (1) auf ein Kundenmedium codiert wird und wobei die Information über die Gültigkeit der codierten Zugangsberechtigung vom Server (3) an die zumindest eine Zugangskontrollvorrichtung (4) übermittelt wird, wobei zur Zugangskontrolle von der jeweiligen Zugangskontrollvorrichtung (4) die Zugangsberechtigung ausgelesen und anhand der vom Server (3) übermittelten Informationen die Gültigkeit der Zugangsberechtigung überprüft wird, wobei wenn ein Verkaufsstellengerät (1) nicht mit dem Server (3) verbunden ist, über den Schlüssel zum Entsperren des im Verkaufsstellengerät (1) installierten Algorithmus der auf dem Verkaufsstellengerät (1) installierte Algorithmus ausgeführt wird, wobei mittels des auf dem Verkaufsstellengerät (1) installierten Algorithmus eine Zugangsberechtigung generiert, verschlüsselt und als Offline-generierte Zugangsberechtigung gekennzeichnet wird, wobei anschließend diese Zugangsberechtigung über die Codiervorrichtung (2) des Verkaufsstellengerätes (1) auf ein Kundenmedium codiert wird, wobei wenn während das Verkaufsstellengerät (1) nicht mit dem Server (3) verbunden ist eine Zugangskontrolle durchgeführt wird, die Offline-generierte Zugangsberechtigung von einer Zugangskontrollvorrichtung (4) ausgelesen wird, wobei sie anhand der Kennzeichnung als Offline-generierte Zugangsberechtigung als solche erkannt wird und die Gültigkeit der Zugangsberechtigung anhand der von dem Verkaufsstellengerät (1) codierten Daten überprüft wird, wobei wenn anschließend das Verkaufsstellengerät (1) mit dem Server (3) verbunden wird, vom Verkaufsstellengerät (1) die Informationen über die vom Verkaufsstellengerät (1) im Offline Modus generierten Zugangsberechtigungen an den Server (3) übermittelt werden, welcher die Informationen über die Gültigkeit der Zugangsberechtigungen an die zumindest eine Zugangskontrollvorrichtung (4) übermittelt, wobei wenn, nachdem das Verkaufsstellengerät (1) in den Online-Modus übergegangen ist, ein Zugangskontrollvorgang mit einer vom Verkaufsstellengerät (1) im Offline Modus generierten Zugangsberechtigung stattfindet, von der Zugangskontrollvorrichtung (4) die Offline-generierte Zugangsberechtigung aus dem Kundenmedium ausgelesen wird und eine Zugangsberechtigung anhand der vom Server (3) übermittelten Informationen auf das Kundenmedium codiert wird und wobei anschlie-ßend die Gültigkeit der Zugangsberechtigung überprüft wird.

2. Verfahren zum Betreiben eines Zugangskontrollsystems umfassend einen Server (3), zumindest eine Zugangskontrollvorrichtung (4) und zumindest ein Verkaufsstellengerät (1) für Zugangsberechtigungen für das vom Zugangskontrollsystem abgedeckte Gebiet, nach Anspruch 1, **dadurch gekennzeichnet, dass** wenn während das Verkaufsstellengerät (1) nicht mit dem Server (3) verbunden ist eine Zugangskontrolle durchgeführt wird, von der Zugangskontrollvorrichtung (4) auf das Kundenmedium eine zeitliche Gültigkeitsbeschränkung codiert wird, wobei die zeitliche Gültigkeitsbeschränkung entfernt wird, wenn nachdem das Verkaufsstellengerät (1) in den Online-Modus übergegangen ist ein Zugangskontrollvorgang stattfindet.
